# EUROPÄISCHE PATENTSCHRIFT

(11) **EP 2 019 216 B1**
(45) Veröffentlichungstag und Bekanntmachung des Hinweises auf die Patenterteilung: **03.09.2014**
(21) Anmeldenummer: 08013234.3
(22) Anmeldetag: 23.07.2008
(51) Int. Cl.: F16C 1/22

(54) **Übertragungssystem**
Transfer system
Système de transmission

(30) Priorität: 27.07.2007 DE 102007035641
(43) Veröffentlichungstag der Anmeldung: 28.01.2009
(73) Patentinhaber: Dura Automotive Systems Einbeck GmbH, 37574 Einbeck (DE)
(72) Erfinder: Beyland, Udo, 37547 Wenzen (DE); Deuse, Mario, 37077 Göttingen (DE); Hoffmann, Karsten, 40880 Ratingen (DE)
(74) Vertreter: Sobisch, Peter

(56) Entgegenhaltungen:
- DE-A1- 19 730 683
- DE-A1-102005 028 634
- DE-U1- 29 817 887

## Beschreibung

Die Erfindung bezieht sich auf ein Übertragungssystem entsprechend dem Oberbegriff des Anspruchs 1.

Derartige Übertragungssysteme kommen beispielsweise in der Form von Seilzugsystemen in vielfältiger Form im Fahrzeugbau zum Einsatz, und zwar zur Übertragung von Schaltkräften zwischen einem Eingangsorgan, beispielsweise einem Handschalthebel oder einem Pedal einerseits und einer zu schaltenden Baugruppe, beispielsweise einem Wechselgetriebe oder auch einer Kupplung andererseits. Sie sind bekannt u. a in der Form der sogenannten Bowdenzüge und bestehen regelmäßig aus einem zur Kraftübertragung bestimmten, als Stahlseil ausgebildeten, in einem flexiblen Hüllkörper längsbeweglich angeordneten Zugelement, wobei die Enden des Hüllkörpers zur ortsfesten Anbringung an Teilen des Fahrzeugs bestimmt und eingerichtet sind.

Aus der DE 197 30 683 A1 ist ein als Betätigungszug u. a. für das Getriebe eines Fahrzeugs bestimmtes Seilzugsystem bekannt, bei welchem ein axial beweglicher, zur Übertragung von Zugkräften bestimmter Übertragungsstrang an seinen Enden lösbar mit Verbindungsstücken versehen ist, die der Ankupplung eines Betätigungsorgans, z. B. eines Schalthebels oder eines eingangsseitigen Schaltorganes eines Getriebes dienen. Die Enden des Übertragungsstranges sind mit Endabschnitten versehen, die axial in eine hülsenartige Aufnahme des Gehäuses des Verbindungsstückes einsteckbar sind und in diesem Zustand mit einem Blockierelement zusammenwirken, das zwischen einer Frelgabeposition, in der ein Einsetzen und ein Entnehmen des Endabschnitts in die Aufnahme / aus der Aufnahme nicht behindert und einer Verriegelungsposition, in der eine Entnahme bzw. ein Einsetzen verhindert werden, bewegbar angeordnet ist. Das Blockierelement steht in der Freigabeposition unter Federvorspannung und wird in der Verriegelungsposition durch einen manuell zu betätigenden Schalthebel, der an dem Gehäuse um eine sich quer zu dem Übertragungsstrang, insbesondere dessen Endabschnitt erstreckende Achse schwenkbar gelagert ist, mittels besonderer Verrastungsnasen, die mit einer Kante des Gehäuses in einen Eingriff bringbar sind, gesichert, Zum Überführen des Schalthebels ausgehend von der Verriegelungsposition in die Freigabeposition muß der Eingriffszustand der Verrastungsnasen mit dem Gehäuse durch elastische Verformung von Strukturelementen des Schalthebels gelöst werden. Hierzu ist eine Zugänglichkeit des Gehäuses aus einer Richtung quer zu der Längserstreckung des Übertragungsstranges erforderlich, eine Bedingung, die bisweilen nicht oder nur sehr eingeschränkt gegeben ist.

Aus der DE 10 2005 028 634 A1 ist ein Übertragungssystem bekannt, welches aus einem, einen Aufnahmeraum für das Endstück eines Zugelements umschließenden Gehäuse besteht, an dem um eine sich quer zu dem Zugelement erstreckende Achse ein winkelartiges Betätigungselement schwenkbar gelagert ist. Das Betätigungselement wirkt auf ein radial innerhalb des Aufnahmeraumes verschiebbar angeordnetes Blockierelement ein, welches einen Formschluss mit dem Zugelement vermittelt und nach Maßgabe der Schwenkung des Betätigungsetementes entgegen einer Federkraft zwischen einer Verriegelungsstellung, in der ein Formschluss gegeben ist und einer Entriegelungsstellung, in der ein Formschluss aufgehoben ist, verschiebbar ist. Die Verriegelungsstellung ist durch eine an dem Betätigungselement, und zwar auf dessen dem Zugelement zugekehrten Seite angeformte Kante formschlüssig gesichert, welche eine Gegenkante des Gehäuses hintergreift. Zur Herbeiführung der Verriegelungsstellung des Betätigungselementes ist ein Zugglied vorgesehen, welches mittels Ausübung einer Zugkraft parallel zu dem Zugelement eine Schwenkung des Betätigungselementes bis zum Verrasten der genannten Kanten bewirkt. Eine Überführung des Betätigungselementes in die Entriegelungsstellung hingegen erfordert den Einsatz eines Werkzeugs bzw. eines Hilfsmittels aus einer bezüglich des Zugelementes seitlichen Richtung.

Ein von seinem Aufbau her und in seinen Eigenschaften im wesentlichen vergleichbares Übertragungssystem ist aus der DE 197 30 683 A1 bekannt.

Das aus der DE 101 27 630 A1 bekannte Übertragungssystem ist durch ein zur Aufnahme eines stabförmigen Bauteils bestimmtes Gehäuse gekennzeichnet, auf dem ein Hohlelement entgegen der Rückstellkraft einer Feder axial verschiebbar angeordnet ist. Das Hohlelement steht mit innerhalb des Gehäuses befindlichen Profilsegmenten in Wirkverbindung, wobei nach Maßgabe der axialen Stellung des Hohlelementes eine Verriegelung des Bauteils mit dem Gehäuse gegeben oder gelöst ist. Zur Sicherung des Verriegelungszustands werden mehrere Techniken vorgestellt, darunter ein Exzenterhebel oder auch eine Anordnung von radial elastisch auslenkbaren Armen, denen eine Eigenschaft gemeinsam ist, nämlich dass zum Lösen und zur Herbeiführung des Verriegelungszustands ein Werkzeugansatz oder zumindest eine Zugänglichkeit des Gehäuses seitlich, somit aus einer Richtung senkrecht zu dem genannten Bauteil erforderlich ist.

Bei der aus dem DE 298 17 887 U1 bekannten Einrichtung handelt es sich um die Befestigung des Endbereichs eines Kabelzuges in einem zylindrischen Hülsenelement, und zwar unter Mitwirkung zweier, bezüglich des Hülsenelements radial verschieblicher, zwecks Darstellung einer Verriegelung mit dem Kabelzugende in eine formschlüssig wirksame Anlage bringbaren Klemmbacken. Zur Betätigung der Klemmbacken ist ein um eine sich quer zu dem Kabelzugende erstreckende Achse schwenkbarer Klemmhebel vorgesehen, der mittels eines seitlich abstehenden Betätigungshebels bewegbar ist. Der Klemmhebel ist an seiner, dem Kabelzugende zugekehrten Seite mit dem Hülsenelement verrastbar. Wesenselement dieser bekannten Einrichtung ist, dass ein nicht unbeträchtliches seitliches Einbauvolumen benötigt wird, um eine Zugänglichkeit des Betätigungshebels zu sichern.

Diese bekannten Übertragungssysteme erfordern zur bestimmungsgemäßen Betätigung eine seitliche Zugänglichkeit und darüber hinaus ein Einbauvolumen, welches nicht in allen Fällen zur Verfügung steht.

Es ist die Aufgabe der Erfindung, ein Übertragungssystem der eingangs genannten Art mit Hinblick auf bequemeres Überführen zwischen einer Verriegelungsposition und einer Freigabeposition hin auszugestalten, wobei ferner die die montagemäßige Handhabbarkeit auch unter räumlich eingeengten Verhältnissen verbessert werden soll. Gelöst ist diese Aufgabe bei einem solchen Übertragungssystem alternativ durch die Merkmale der Kennzeichnungsteile der Ansprüche 1 und 2.

Ausgangspunkt ist ein global aus einem Gehäuse und einem an diesem zwischen der Freigabe- und der Verriegelungsposition schwenkbar angelenkten Betätigungselement bestehendes Kupplungsstück, in welchem das diesem zugekehrte Ende eines Zug- und/oder Druckelements lösbar aufgenommen ist. Das Kupplungsstück bildet das Bindeglied zu einer zu betätigenden Baugruppe einerseits und zu einem Betätigungsorgan andererseits und es werden die genannten Zug- oder Druckkräfte über dieses übertragen. Das Zug- und/oder Druckelement ist zu diesem Zweck in an sich bekannter Weise endseitig mit einem profilierten Verbindungsabschnitt versehen, der in der Verriegelungsposition mit entsprechend ausgebildeten Gegenelementen des Kupplungsstücks formschlüssig im Eingriff steht. Erfindungswesentlich ist, dass an dem Gehäuse und/oder dem Betätigungselement Betätigungsorgane angeordnet sind, die aus einer, der Längsachse des eingesetzten Zug- und/oder Druckelements entsprechenden oder einer zu dieser zumindest parallelen Richtung zugänglich und insbesondere betätigbar sind, um das Kupplungsstück zwischen den genannten Positionen schalten zu können. Letzteres kann in einfacher Weise mittels eines langgestreckten Werkzeugs geschehen, z. B. mit einem Schraubenzieher durchgeführt werden, und zwar in beiden Schaltrichtungen. Die Zugänglichkeit der Betätigungsorgane aus der genannten Richtung und zwar mit Blickrichtung auf das zugekehrte Ende des Zug- und/oder Druckelementes eröffnet eine auch unter räumlich eingeengten Verhältnissen bequeme Arbeitsmöglichkeit sowohl bei der Montage als auch bei der Demontage des Kupplungsstücks. Hinzutritt der weitere Vorteil, dass kein Spezialwerkzeug erforderlich ist, sondern von allgemein verfügbaren Standardwerkzeugen Gebrauch gemacht werden kann.

Zweckmäßigerweise ist das Betätigungselement durch solche Mittel schwenkbar an dem Gehäuse angelenkt, die an dem freien Ende des einen der beiden, das Betätigungselement darstellenden Teile angeordnet sind. Die zur Verrastung des Betätigungselementes an dem Gehäuse in der Verriegelungsposition des Kupplungsstücks bestimmten Funktionselemente werden zweckmäßigerweise an dem freien Ende des anderen der beiden Teile angeordnet. Für die Darstellung einer Schaltbewegung der im Rahmen der genannten Elementenpaarung zusammenwirkenden Verrastungskante sowie der genannten Gegenkante steht somit ein größtmöglicher Weg zur Verfügung.

Das Kupplungsstück ist mit der Maßgabe ausgebildet, dass die Überführung ausgehend von der Freigabeposition in Richtung auf die Verriegelungsposition hin entgegen der Rückstellkraft eines Federelements erfolgt, durch welches somit die Bewegung der Rücküberführung in die Freigabeposition zumindest unterstützt wird.

Gemäß einer ersten Alternative entsprechend den Merkmalen des Kennzeichnungsteils des Anspruchs 1 werden die Betätigungsorgane durch Schlitze gebildet, welche durch schachtartige Hohlräume dargestellt sind, die an diese Zweckbestimmung angepasst sind. Sie können ferner im Umfangsbereich profiliert, insbesondere an ein bestimmtes Werkzeug wie z. B. einen Schraubenzieher angepasst sein.

Gemäß einer zweiten Alternative entsprechend den Merkmalen des Kennzeichnungsteils des Anspruchs 2 werden die Betätigungsorgane durch lediglich einen, einen Schlitz bildenden Hohlraum verkörpert, der zur Aufnahme eines Werkzeugs bestimmt ist.

Die Verriegelungsposition ist formschlüssig nach Art einer Verrastung gesichert, welche entsprechend den Merkmalen des Anspruchs 3 durch eine elastische Vorspannung gekennzeichnet und somit spielfrei ist. Technisch dargestellt werden kann die genannte Elementenpaarung durch eine Verriegelungskante an dem einen Teil und eine mit dieser zusammenwirkende Gegenkante an dem anderen Teil. Die Komponenten des Kupplungsstücks sind vorzugsweise aus Kunststoff ausgebildet, so dass eine erforderliche Elastizität einfach bereitstellbar ist.

Die Merkmale des Anspruchs 4 sind auf eine weitere Konkretisierung der Anordnung des genannten Hohlraums bei der zweiten Alternative gerichtet.

Zusätzlich zu der ihrem Bestimmungszweck entsprechenden Bemessung des Hohlraumes ist mit Hinblick auf eine bequeme, insbesondere leichtgängige Durchführung der Schaltbewegungen des Betätigungselementes entsprechend den Merkmalen des Anspruchs 5 vorgesehen, dass das Teil, von dem aus sich der Hohlraum / die Hohlräume erstrecken, eine hinreichende Elastizität aufweist. Dies kann eine entsprechende Werkstoffwahl oder durch dementsprechende Gestaltung dieses Teiles erreicht werden.

Die Merkmale der Ansprüche 6 bis 8 sind auf eine weitere konstruktive Konkretisierung der genannten Betätigungsorgane gerichtet. Diese sind hiernach durch einen Bügel und ein Stegelement dargestellt, welche in Verbindung mit einem Werkzeug zur Einleitung der Schaltbewegungen des Kupplungsstücks bestimmt sind. Der Bügel kann im Umfangsbereich profiliert und an die Gestalt des einzusetzenden Werkzeugs angepasst sein. Das Stegelement ist demgegenüber nur zur Ausübung einer normal zu dessen Oberfläche bestimmten Kraft eingerichtet, welche darauf abzielt, den Verrastungseingriff in der Verriegelungsposition zu lösen. Dementsprechend befindet sich die genannte Elementenpaarung in unmittelbarer Nähe des Stegelements.

Die Merkmale des Anspruchs 9 sind auf eine vorteilhafte konstruktive Ausbildung der Lagerung des Betätigungselements an dem Gehäuse gerichtet.

Gemeinsam ist allen Ausbildungsformen des Kupplungsstücks, dass die zur Durchführung der vorstehend beschriebenen Schaltbewegungen benötigten Betätigungsorgane sämtlich aus einer Richtung zumindest parallel zu der Längsachse des eingesetzten Zug- und/oder Druckelements zugänglich sind und dass kein Spezialwerkzeug benötigt wird.

Die Erfindung wird im Folgenden unter Bezugnahme auf die in den Zeichnungen schematisch wiedergegebenen Ausführungsbeispiele näher erläutert werden. Es zeigen:
Fig. 1 eine perspektivische Darstellung eines ersten Ausführungsbeispiels des Endbereichs eines erfindungsgemäßen Übertragungssystems in der Verriegelungsposition;
Fig. 2 das Ausführungsbeispiel gemäß Fig. 1 in einer Explosionsdarstellung;
Fig. 3 eine perspektivische Darstellung eines zweiten Ausführungsbeispiels des Endbereiches eines Übertragungssystems in der Freigabeposition;
Fig. 4 eine perspektivische, die Überführung in die Verriegelungsposition ausgehend von der Freigabeposition zeigende Darstellung des Ausführungsbeispiels gemäß Fig. 3;
Fig. 5 eine perspektivische Darstellung des Ausführungsbeispiels gemäß Fig. 3 in der Verriegelungsposition;
Fig. 6 eine perspektivische, die Überführung in die Freigabeposition ausgehend von der Verriegelungsposition zeigende Darstellung des Ausführungsbeispiels gemäß Fig. 3;
Fig. 7 eine perspektivische Darstellung des in Fig. 1 gezeigten Ausführungsbeispiels in der Freigabeposition;
Fig. 8 eine perspektivische, die Überführung in die Verriegelungsposition ausgehend von der Freigabeposition zeigende Darstellung des Ausführungsbeispiels gemäß Fig. 7;
Fig. 9 eine perspektivische Darstellung des in Fig. 1 gezeigten Ausführungsbeispiels in der Freigabeposition:
Fig. 10 eine perspektivische, die Überführung-in die Freigabeposition ausgehend von der Verriegelungsposition zeigende Darstellung des Ausführungsbeispiels gemäß Fig. 1;
Fig. 11 eine perspektivische, die Überführung eines dritten Ausführungsbeispiels in die Verriegelungsposition ausgehend von der Freigabeposition zeigende Darstellung;
Fig. 12 eine perspektivische, die Überführung des Ausführungsbeispiels gemäß Fig. 11 in die Freigabeposition ausgehend von der Verriegelungsposition zeigende Darstellung.

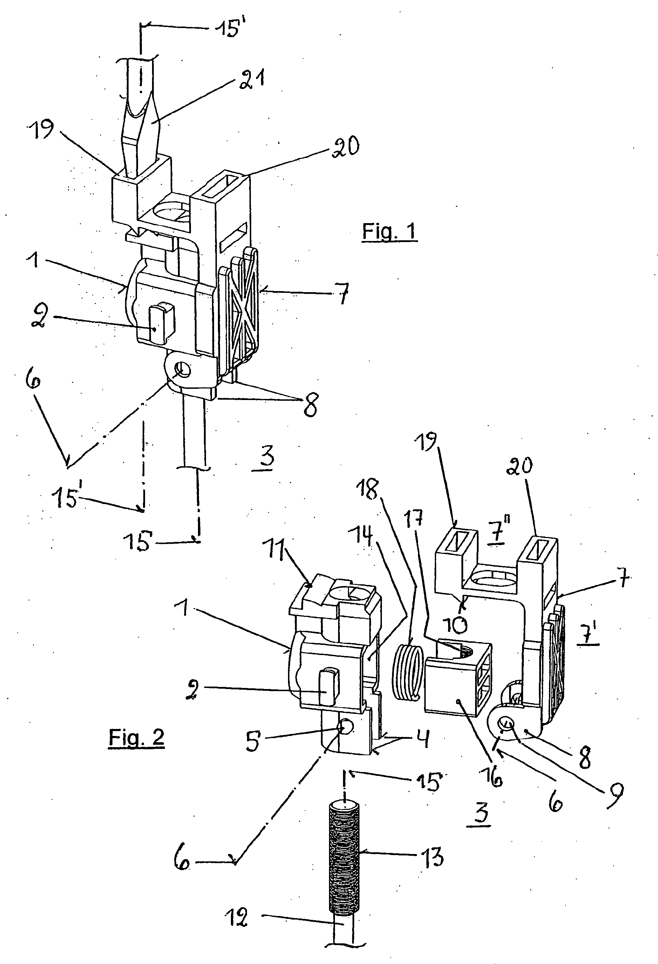

Mit 1 ist in den Figuren 1 und 2 ein Gehäuse bezeichnet, welches über ein Paar Lagerzapfen 2, von denen einer zeichnerisch wiedergegeben ist, an Strukturelementen eines Betätigungsorgans, z. B. einem Handschalthebel oder auch an den eingangsseitlgen Schaltorganen eines Getriebes festlegbar ist. Das Gehäuse 1 weist an seiner Unterseite 3 zwei sich parallel und mit Abstand zueinander erstreckende Lagerkonsolen 4 auf, an deren jeweiligen Außenseiten Lagerzapfen 5 angeformt sind, von denen einer dargestellt ist und die eine Achse 6 definieren, um die ein .Betätigungselement 7 schwenkbar gelagert ist.

An dem Betätigungselement 7, und zwar dessen der Unterseite 3 zugekehrten Ende sind zwei zueinander parallele Lagerwangen 8 angeformt, deren zueinander fluchtende Bohrungen 9 mit den Lagerzapfen 5 des Gehäuses 1 zusammenwirken.

Das Betätigungselement 7 ist global winkelartig ausgestaltet und besteht aus einem, sich an die Lagerwangen 8 anschließenden ersten Teil 7' und einem, sich senkrecht zu den ersten Teil erstreckenden zweiten Teil 7", an dessen, im montierten Zustand dem Gehäuse 1 zugekehrter Unterseite eine Verrastungskante 10 angeformt ist. Diese Verrastungskante 10 ist zum Verrasten mit einer an der zugekehrten Oberseite des Gehäuses 1 angeformten Gegenkante 11 bestimmt und eingerichtet.

Das zweite Teil 7" des Betätigungselementes 7 ist mit der Maßgabe eingerichtet, dass ein Eingriff zwischen der Verrastungskante 10 und der Gegenkante 11 unter geringfügiger elastischer Verformung, somit spielfrei dargestellt ist. Dieser Eingriff bildet die Verriegelungsposition des Seilzugsystems wie im Folgenden noch näher erläutert werden wird.

Mit 12 ein Zugelement, z. B. Stahlseil bezeichnet, dessen, dem Gehäuse zugekehrtes Ende einen im Oberflächenbereich profilierten, beispielsweise verzahnten Verbindungsabschnitt 13 darstellt. Das Zugelement 12 ist in einen zeichnerisch nicht dargestellten, elastischen Hüllkörper eingebunden, demgegenüber es beweglich angeordnet ist.

Die nachfolgende Beschreibung ist lediglich beispielhaft auf ein Seilzugsystem, nämlich eine seilartige, zur Übertragung von Zugkräften gerichtete Konkretisierung des Zug- und/oder Druckelementes gerichtet. Es versteht sich jedoch, dass diese erfindungsgemäße Technik gleichermaßen bei zur Übertragung von Druckkräften eingerichteten Druckelementen oder bei sowohl zur Übertragung von Druck- als auch von Zugkräften eingerichteten Zug- und Druckelementen vorteilhaft eingesetzt werden kann.

Das Gehäuse 1 weist auf seiner, dem Betätigungselement 7 zugekehrten Seite eine im Querschnitt quadratische Führung 14 auf, die sich senkrecht zu einer Längsachse 15 des Zugelementes 12 erstreckt und zur Aufnahme eines Verriegelungselementes 16 dient. Letzteres ist auf seiner, dem Gehäuse 1 zugekehrten Seite mit einem Innenprofil 17 versehen, welches zum formschlüssigen Zusammenwirken mit dem Verbindungsabschnitt 13 bestimmt und eingerichtet ist.

Das Verriegelungselement 16 steht in der Führung 14 mit einem Federelement 18 in Verbindung, durch welches der Eingriff zwischen der Verrastungskante 10 und der Gegenkante 11 unter mechanischer Vorspannung gehalten ist. Dieser, der Verriegelungsposition des Seilzugsystems entsprechende Zustand ist ferner **dadurch gekennzeichnet, dass** der durch eine zeichnerisch nicht dargestellte, der Unterseite 3 zugekehrte Öffnung des Gehäuses 1 hindurch in dieses eingeführte Verbindungsabschnitt 13 in dieser Einsetzposition formschlüssig durch das Innenprofil 17 des Verriegelungselementes gesichert ist. In dieser Position ist das Zugelement 12 somit betriebsbereit.

Eine Bewegung des Verriegelungselementes 16 zwischen der in Fig. 1 gezeigten Verriegelungsposition und einer Freigabeposition, in welcher der Eingriff zwischen dem Innenprofil 17 und dem Verbindungsabschnitt 13 gelöst ist, ist somit durch Schwenkung des Betätigungselementes 7 um die Achse 6 bewirkbar. Man erkennt, dass die Bewegung des Verriegelungselementes 16 ausgehend von der Verriegelungsposition in die Freigabeposition hin durch das Federelement 18 unterstützt wird. Man erkennt ferner, dass durch das Federelement 18 ein spielfreier Eingriff der Vemegelungskante 10 mit der Gegenkante 11 darstellbar ist bzw. unterstützt wird.

Mit 19, 20 sind zwei entlang des zweiten Teiles 7" des Betätigungselementes 7 voneinander beabstandete, sich parallel zu der Achse 15 erstreckende Schlitze bezeichnet, die in Verbindung mit einem angedeuteten Schraubenzieher 21 oder einem vergleichbaren Werkzeug zum Überführen des Betätigungselementes 7 von der Freigabe- in die Verriegelungsposition und umgekehrt bestimmt sind. Man erkennt, dass aufgrund der Orientierung der Längserstreckung der diese Schlitze 19, 20 definierenden Ausnehmungen ein zur Überführung des Verriegelungselementes16 zwischen der Freigabeposition und der Verriegelungsposition zu benutzendes Werkzeug stets in der Richtung der Längsachse 15 des Zugelementes 12 oder einer zu dieser parallelen Achse 15' einzusetzen ist.

Die Benutzung des in den Figuren 1 und 2 beschriebenen Seilzugsystems wird im Folgenden unter Bezugnahme auf die Zeichnungsfiguren 7 bis 10 noch beschrieben werden.

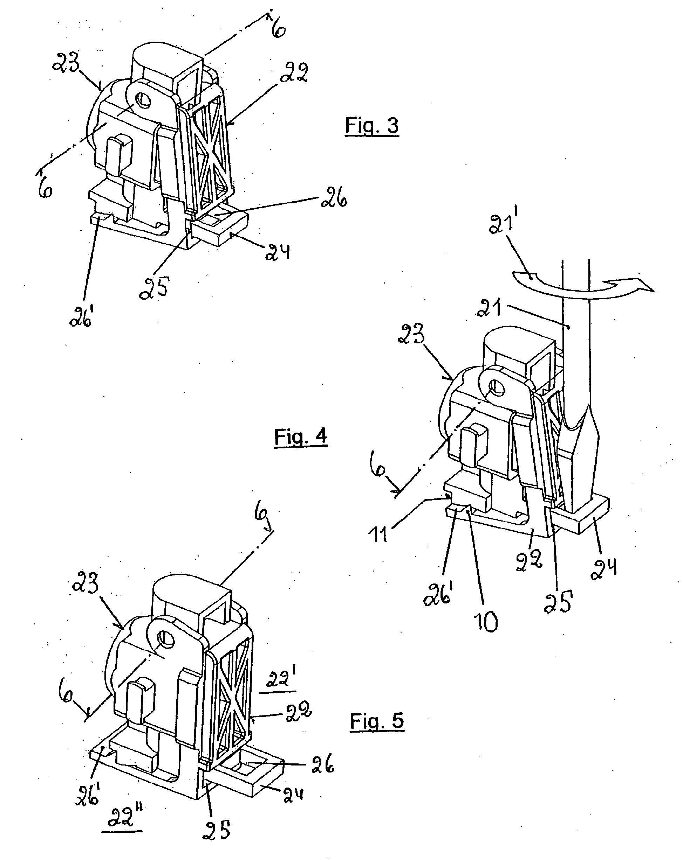

Bei dem in den Figuren 3 bis 6 dargestellten Seilzugsystem ist wiederum ein Betätigungselement 22 um eine Achse 6 an einem Gehäuse 23 zwischen einer in Fig. 3 gezeigten Freigabeposition und einer in Fig. 5 gezeigten Verriegelungsposition schwenkbar gelagert.

Die Lagerung des Betätigungselements 22 an dem Gehäuse 23 sowie dessen formschlüssige Verrastung in der Verriegelungsposition sind konstruktiv in gleicher Weise wie bei dem Ausführungsbeispiel gemäß den Fig. 1 und 2 ausgebildet. Gleiches gilt für die Anordnung und Führung eines federbeaufschlagten Verriegelungselements 16. Diese Konstruktionsmerkmale sind allen Ausführungsformen gemeinsam. Letzteres gilt auch für den global winkelförmigen, aus zwei sich senkrecht zueinander erstreckenden, fest miteinander in Verbindung sehenden Teilen zusammengesetzten Aufbau des Betätigungselementes.

Mit 24 ist ein an dem Gehäuse 23 angeformter, sich durch einen Schlitz 25 eines ersten Teiles 22' des Betätigungselementes 22 hindurcherstreckender Bügel bezeichnet, der in der Freigabeposition des Betätigungselementes 22 nur noch teilweise aus dem genannten Schlitz herausragt. Wie Fig. 4 zeigt, kann ausgehend von dieser Freigabeposition eine Überführung in die Verriegelungsposition dadurch bewirkt werden, dass in die durch den Bügel 24 umschlossene, noch teilweise aus dem Schlitz herausragende Ausnehmung 26 ein Schraubenzieher 21 oder ein strukturell vergleichbares Werkzeug eingesetzt und in Richtung des Pfeiles 21' gedreht wird, wodurch das Betätigungselement 22 entgegen der Wirkung des Federelementes 18 (Fig. 2) um die Achse 6 verschwenkt wird, bis der Verrastungszustand der Verriegelungsposition durch einen Eingriff der Verrastungskante 10 mit der Gegenkante 11 hergestellt ist. Diese Verriegelungsposition ist in Fig. 5 gezeigt.

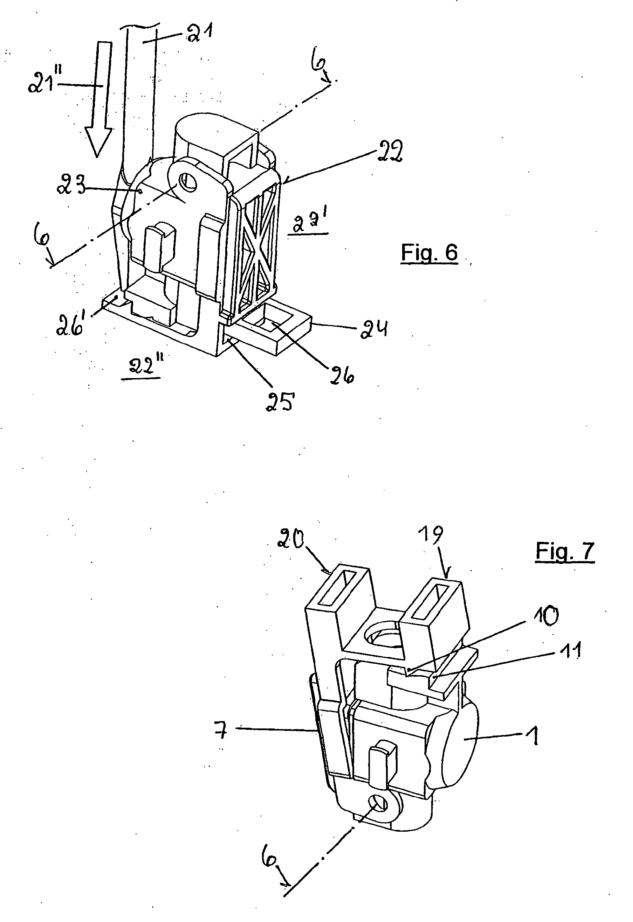

Mit 26' ist ein Stegelement bezeichnet, welches im Bereich der Verrastungskante 10 an einem zweiten Teil 22" des Betätigungselementes 22 angeformt ist und sich in der Verriegelungsposition über das Gehäuse 23 hinauserstreckt. Das Stegelement 26' bildet zumindest in der Verrastungsposition eine Fläche, die sich senkrecht zu der Längsrichtung eines innerhalb des Gehäuses 23 aufzunehmenden Zugelementes 12 (Fig. 2) erstreckt und die aus einer sich parallel zu diesem verlaufenden Richtung mittels eines Werkzeugs wie z. B. einem Schraubenzieher zugänglich ist. Ausgehend von dieser Verriegelungsposition kann wie in Fig. 6 dargestellt, die Freigabeposition des Betätigungselementes 22 dadurch eingeleitet werden, dass wiederum mittels eines Schraubenziehers 21 oder eines strukturell vergleichbaren Werkzeugs eine Kraft auf das Stegelement 26' in der Richtung 21 " ausgeübt wird, somit in einer, den Eingriff der Verrastungskante 10 mit der Gegenkante 11 lösenden Richtung, wobei es zu einer elastischen Verformung der ersten und zweiten Teile 22', 22" des Betätigungselementes 22 kommt. Sobald dieser Eingriff gelöst ist, erfolgt eine sich anschließende Schwenkbewegung um die Achse 6 bis in die in Fig. 3 gezeigte Freigabeposition unter der Wirkung des sich entspannenden Federelementes 18.

Man erkennt, dass zum Bewegen des Betätigungselementes 22 ein Werkzeug benutzt wird, welches ausschließlich in einer der Längsrichtung des Zugelements 12 (Fig. 2) entsprechenden Richtung zum Einsatz kommt.

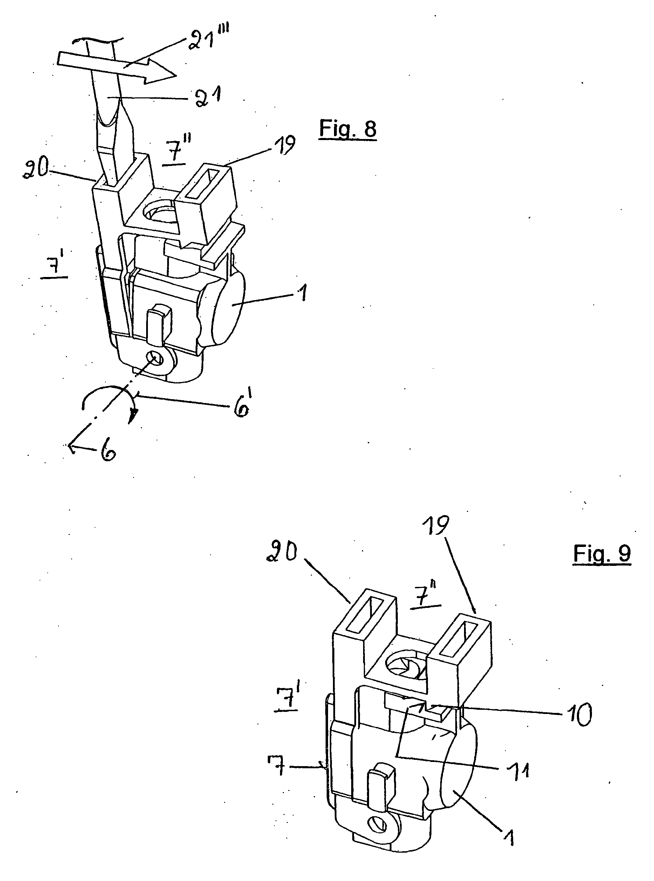

Fig. 7 zeigt die Freigabeposition des in den Fig. 1 und 2 dargestellten Seilzugsystems, welche unter Mitwirkung des Federelements 18 dargestellt ist. Ausgehend von dieser Position wird die Verriegelungsposition gemäß Fig. 8 mittels eines in den Schlitz 20 eingeführten Schraubenziehers 21 dadurch herbeigeführt, dass der Schraubenzieher in der Richtung 21''' bewegt wird, so dass sich eine Schwenkung des Betätigungselementes 7 um die Achse 6 in der Richtung 6' ergibt bis es schließlich zu einem Eingriff der Verrastungskante 10 mit der Gegenkante 11 kommt und die Verriegelungsposition erreicht ist.

Fig. 9 zeigt die Verriegelungsposition, die durch den Eingriff der Verrastungskante 10 mit der Gegenkante 11 gekennzeichnet ist.

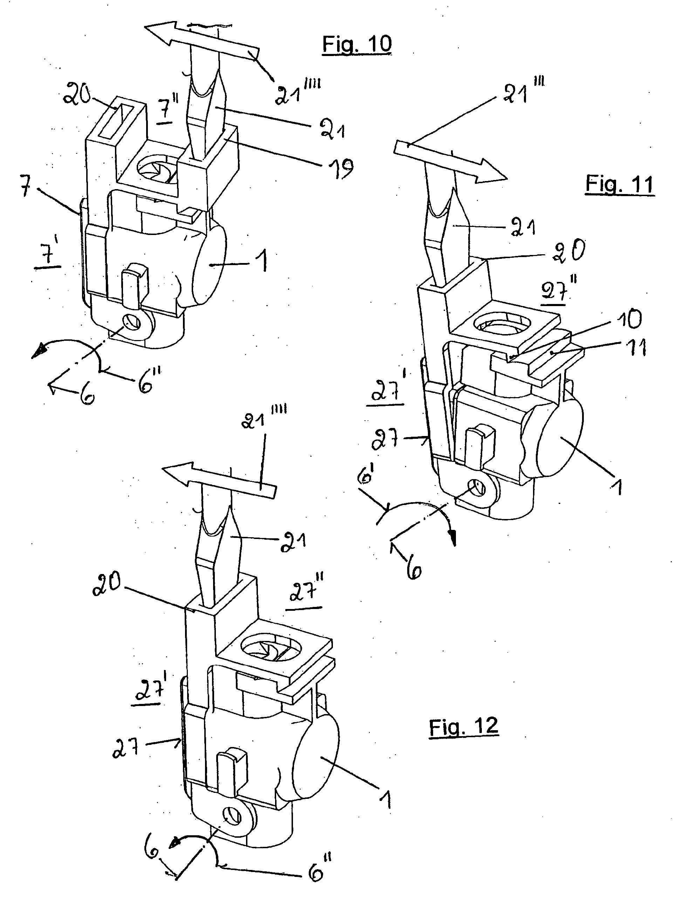

Fig. 10 zeigt, dass ausgehend von der Verriegelungsposition die Freigabeposition dadurch erreicht werden kann, dass ein Schraubenzieher 21 nunmehr in den Schlitz 19 eingeführt wird und auf die Wandungen des Schlitzes eine Kraft in der Richtung 21'''' ausgeübt wird. Dies führt zu einer elastischen Verkantung des zweiten Teiles 7", insbesondere einem Aufbiegen und somit zu einem Lösen des Eingriffs der Verrastungskante 10 mit der Gegenkante 11. Unter der Wirkung des Federelementes 18 wird das Betätigungselement 7 um die Achse 6 in Richtung des Pfeiles 6" in die in Fig. 7 gezeigte Freigabeposition zurückgeschwenkt.

Das in den Fig. 11 und 12 dargestellte Seilzugsystem ist durch ein Gehäuse 1 und ein Betätigungselement 27 gekennzeichnet, welches sich von dem Betätigungselement 7 dadurch unterscheidet, dass nunmehr nur ein Schlitz 20 vorgesehen ist, der zum Zusammenwirken mit einem Schraubenzieher 21 oder einem vergleichbaren langgestreckten Werkzeug bestimmt und angeordnet ist. Der Schlitz 20 befindet sich an dem Eckbereich der beiden, das Betätigungselement 27 darstellenden, sich unter einem rechten Winkel zueinander erstreckenden ersten und zweiten Teile 27', 27".

Ausgehend von der in Fig. 11 gezeigten Freigabeposition wird die Verriegelungsposition dadurch erreicht, dass ein Schraubenzieher 21 in den Schlitz 20 eingesetzt wird und das Betätigungselement 27 mittels einer Kraft in der Richtung 21 "' um die Achse 6 in der Richtung des Pfeiles 6' in die Verriegelungsposition verschwenkt wird, bis es zu einem Eingriff der Verrastungskante 10 mit der Gegenkante 11 kommt.

Umgekehrt wird ausgehend von der in Fig. 12 gezeigten Verriegelungsposition die Freigabeposition gemäß Fig. 11 dadurch erreicht, dass nunmehr mittels des Schraubenziehers 21 eine Kraft in der Richtung 21'''' ausgeübt und somit eine Schwenkung des Betätigungselementes 27 um die Achse 6 in der Richtung des Pfeiles 6'' in die Freigabeposition eingeleitet wird.

Wesentlich für die in den Figuren 11 und 12 dargestellte Ausführungsform ist, dass das Betätlgungselement 27 eine hinreichende Elastizität aufweist, so dass mit der Ausübung von Kräften in den Richtungen 21''', 21'''' eine hinreichende, ein Lösen bzw. ein Herbeiführen des Eingriffs der Verrastungskante 10 und der Gegenkante ermöglichende Verformung des zweiten Telles 27" gegenüber dem ersten Teil 27' des Betätigungselement 27 erreichbar ist.

Gemeinsam ist allen der vorstehend beschriebenen Ausführungsformen, dass ein Werkzeug stets im wesentlichen in der Längsrichtung oder auch parallel zu der Längsrichtung eines Zugelementes zum Einsatz kommt. Dies stellt in vielen Fällen eine bevorzugte Richtung dar, welche eine montagemäßig bequeme Handhabung dieses Seilzugsystems ermöglicht, insbesondere unter schwierigen, räumlich engen Einbauverhältnissen.

## Patentansprüche

1. Übertragungssystem zur Übertragung von Zug- und/oder Druckkräften zwischen zwei voneinander beabstandeten Punkten zur Verwendung im Fahrzeugbereich zwischen einem Betätigungsorgan und einer zu betätigenden Baugruppe, mit einem Zug- und/oder Druckelement (12), dessen wenigstens eines Ende einen zur lösbaren Anbindung an ein Kupplungsstück bestimmten Verbindungsabschnitt (13) aufweist, wobei das Kupplungsstück das jeweilige Bindeglied im Bereich des Betätigungsorgans und/oder der genannten Baugruppe bildet, wobei das Kupplungsstück aus einem Gehäuse (1, 23) und einem an diesem um eine Achse (6) zwischen einer ein Einsetzen sowie ein Entnehmen des Zug- und/oder Druckelements (12) ermöglichenden Freigabeposition und einer das Zug- und/oder Druckelement (12) in der eingesetzten Position fixierenden Verriegelungsposition schwenkbaren Betätigungselement (7, 22, 27) besteht, wobei das Betätigungselement (7, 22, 27) aus einem ersten Teil (7', 22', 27') und einem zweiten, sich gegenüber dem ersten unter einem Winkel erstreckenden Teil (7", 22", 27") besteht, deren einer mit einem, in einer, sich senkrecht zur Längsachse (15) des Zug- und/oder Druckelements (12) erstreckenden Führung (14) des Gehäuses (1) gleitfähig aufgenommenen, in der Verriegelungsposition in einem Formschluss mit dem Verbindungsabschnitt (13) stehenden Verriegelungselement (16) in Wirkverbindung steht, wobei die Verriegelungsposition des Betätigungselements (7, 22, 27) durch einen Formschluss einer Elementenpaarung bestehend aus einer Verriegelungskante (10) und einer Gegenkante (11), die sich an einander zugekehrten Bereichen des Betätigungselements oder des Gehäuses (1, 23) befinden, gesichert ist, wobei das Betätigungselement (7, 22, 27) an dem freien Ende des einen seiner beiden jeweiligen ersten und zweiten Teile (7', 7"; 22', 22"; 27',27") um die Achse (6) schwenkbar gelagert ist, und wobei das Gehäuse (1, 23) und/oder das Betätigungselement (7, 22, 27) mit Betätigungsorganen ausgerüstet ist/sind, die aus einer Richtung parallel zu der Längsachse des Zug- und/oder Druckelements (12) oder einer zu dieser im wesentlichen parallelen Richtung mittels eines langgestreckten Standardwerkzeugs zum Zweck einer Schaltung des Kupplungsstücks zwischen der Freigabeposition und der Verriegelungsposition betätigbar sind, **dadurch gekennzeichnet, dass** die Betätigungsorgane durch an dem zweiten Teil (7") angeformte Schlitze (19, 20) gebildet sind, die in einer Richtung quer zu der Längsachse des eingesetzten Zug- und/oder Druckelementes (12) voneinander beabstandet sind und durch schachtoder rohrartige, sich zumindest angenähert parallel zu der genannten Längssachse erstreckende, zur Aufnahme des Standardwerkzeugs eingerichtete Hohlräume gebildet werden.

2. Übertragungssystem zur Übertragung von Zug- und/oder Druckkräften zwischen zwei voneinander beabstandeten Punkten zur Verwendung im Fahrzeugbereich zwischen einem Betätigungsorgan und einer zu betätigenden Baugruppe, mit einem Zug- und/oder Druckelement (12), dessen wenigstens eines Ende einen zur lösbaren Anbindung an ein Kupplungsstück bestimmten Verbindungsabschnitt (13) aufweist, wobei das Kupplungsstück das jeweilige Bindeglied im Bereich des Betätigungsorgans und/oder der genannten Baugruppe bildet, wobei das Kupplungsstück aus einem Gehäuse (1, 23) und einem an diesem um eine Achse (6) zwischen einer ein Einsetzen sowie ein Entnehmen des Zug- und/oder Druckelements (12) ermöglichenden Freigabeposition und einer das Zug- und/oder Druckelement (12) in der eingesetzten Position fixierenden Verriegelungsposition schwenkbaren Betätigungselement (7, 22, 27) besteht, wobei das Betätigungselement (7, 22, 27) aus einem ersten Teil (7', 22', 27') und einem zweiten, sich gegenüber dem ersten unter einem Winkel erstreckenden Teil (7", 22", 27") besteht, deren einer mit einem, in einer, sich senkrecht zur Längsachse (15) des Zug- und/oder Druckelements (12) erstreckenden Führung (14) des Gehäuses (1) gleitfähig aufgenommenen, in der Verriegelungsposition in einem Formschluss mit dem Verbindungsabschnitt (13) stehenden Verriegelungselement (16) in Wirkverbindung steht, wobei die Verriegelungsposition des Betätigungselements (7, 22, 27) durch einen Formschluss einer Elementenpaarung bestehend aus einer Verriegelungskante (10) und einer Gegenkante (11), die sich an einander zugekehrten Bereichen des Betätigungselements oder des Gehäuses (1, 23) befinden, gesichert ist, wobei das Betätigungselement (7, 22, 27) an dem freien Ende des einen seiner beiden jeweiligen ersten und zweiten Teile (7', 7"; 22', 22"; 27',27") um die Achse (6) schwenkbar gelagert ist, und wobei das Gehäuse (1, 23) und/oder das Betätigungselement (7, 22, 27) mit Betätigungsorganen ausgerüstet ist/sind, die aus einer Richtung parallel zu der Längsachse des Zug- und/oder Druckelements (12) oder einer zu dieser im wesentlichen parallelen Richtung mittels eines langgestreckten Standardwerkzeugs zum Zweck einer Schaltung des Kupplungsstücks zwischen der Freigabeposition und der Verriegelungsposition betätigbar sind, **dadurch gekennzeichnet, dass** das Betätigungsorgan durch einen an dem zweiten Teil (27") angeformten Schlitz (20) gebildet ist, der durch einen schacht- oder rohrartigen, sich zumindest angenähert parallel zu der Längsachse des eingesetzten Zug- und/oder Druckelementes (12) erstreckenden, zur Aufnahme des Standardwerkzeugs eingerichteten Hohlraum gebildet ist.

3. Übertragungssystem nach Anspruch 1 oder 2, **dadurch gekennzeichnet, dass** die genannte Elementenpaarung in der Verriegelungsposition des Kupplungsstücks unter elastischer Vorspannung steht.

4. Übertragungssystem nach Anspruch 2, **dadurch gekennzeichnet, dass** sich der den Schlitz (20) darstellende schacht- oder rohrartige Hohlraum im wesentlichen in der Ebene des ersten Teils (27') des Betätigungselementes (27) erstreckt.

5. Übertragungsystem nach einem der vorangegangenen Ansprüche 1 bis 4, **dadurch gekennzeichnet, dass** die, die Schlitze (19, 20) darstellenden Hohlräume mit der Maßgabe bemessen und angeordnet sind, dass mittels eines Schraubenziehers (21) eine elastische, zum Lösen des Eingriffs der genannten Elementenpaarung geeignete Verformung des jeweiligen zweiten Teiles (7", 27") gegenüber dem jeweiligen ersten Teil (7', 27') darstellbar ist.

6. Übertragungssystem nach Anspruch 1 oder 3, **dadurch gekennzeichnet, dass** das Betätigungsorgan durch einen, an dem Gehäuse (23) angeformten, eine Ausnehmung (26) umschließenden Bügel (24) gebildet ist, der sich durch einen, an dem ersten Teil (22') von der Achse (6) entfernt angeordneten Schlitz (25) des Betätigungselementes (22) nach Maßgabe dessen Schwenkwinkels um die Achse (6) hindurcherstreckt, dass sich die Ausnehmung (26) zumindest im wesentlichen in einer Ebene quer zu der Längsachse des eingesetzten Zug- und/oder Druckelementes (12) erstreckt und zur Aufnahme des Standardwerkzeugs aus einer zu der Längsachse des Zug- und/oder Druckelements (12) zumindest im wesentlichen parallelen Richtung zwecks Aufbringung einer das Betätigungselement (22) gegenüber dem Gehäuse (23) um die Achse (6) verschwenkenden Kraft bestimmt und eingerichtet ist.

7. Übertragungssystem nach Anspruch 6, **dadurch gekennzeichnet, dass** sich die Ebene der Ausnehmung (26) angenähert in der Ebene des zweiten Teiles (22") des Betätigungselementes (22) erstreckt und dass sich an dem freien Ende des genannten zweiten Teiles ein sich senkrecht zu dem Zug- und/oder Druckelement (12) erstreckendes Stegelement (26') befindet, welches mit der Maßgabe bemessen ist, dass es in der Verriegelungsposition des Kupplungsstücks seitlich aus dem Gehäuse (23) hervorsteht und mittels des Standardwerkzeugs zur Ausübung einer senkrecht zu diesem gerichteten, für ein Lösen des Eingriffs der genannten Elementenpaarung bestimmten Kraft geeignet ist.

8. Übertragungssystem nach Anspruch 7, **dadurch gekennzeichnet, dass** sich die Elementenpaarung bestehend aus einer Verrastungskante (10) und einer Gegenkante (11) in unmittelbarer Nähe des Stegelementes (26') an dem zweiten Teil (22") sowie dem Gehäuse (23) befindet.

9. Übertragungssystem nach einem der vorangegangenen Ansprüche 1 bis 8, **dadurch gekennzeichnet, dass** zur Lagerung des Betätigungselementes (7, 22, 27) an dem Gehäuse (1, 23) zwei in Richtung der Achse (6) voneinander beabstandete Lagerwangen (8) an dem Gehäuse oder dem Betätigungselement vorgesehen sind, die zum Zusammenwirken mit zwei, jeweils an einer Lagerkonsole (4) angeformten, an dem Betätigungselement oder dem Gehäuse befindlichen Lagerzapfen (5) bestimmt und angeordnet sind.

## Claims

1. Transfer system for transferring tensile and/or compressive forces between two mutually spaced apart points for use in the vehicle sector between an actuating member and an assembly to be actuated, having a tension and/or compression element (12), whose at least one end comprises a connecting portion (13) intended for releasable connection to a coupling piece, wherein the coupling piece forms the respective attaching link in the region of the actuating member and/or said assembly, wherein the coupling piece consists of a housing (1, 23) and an actuating element (7, 22, 27) which is pivotable thereon about an axis (6) between a releasing position, which permits insertion and removal of the tension and/or compression element (12), and a locking position which fixes the tension and/or compression element (12) in the inserted position, wherein the actuating element (7, 22, 27) consists of a first part (7', 22', 27') and a second part (7", 22", 27") extending at an angle with respect to the first part, one of which parts is operatively connected to a locking element (16) which is slidably received in a guide (14) - extending perpendicularly with respect to the longitudinal axis (15) of the tension and/or compression element (12) - of the housing (1) and, in the locking position, is connected in a form-fitting manner to the connecting portion (13), wherein the locking position of the actuating element (7, 22, 27) is secured by a form-fit of an element pairing consisting of a locking edge (10) and a counter edge (11) which are located at mutually facing regions of the actuating element or of the housing (1, 23), wherein the actuating element (7, 22, 27) is mounted at the free end of one of its two respective first and second parts (7', 7"; 22', 22"; 27', 27") so as to be able to pivot about the axis (6), and wherein the housing (1, 23) and/or the actuating element (7, 22, 27) is/are equipped with actuating members which can be actuated from a direction in parallel with the longitudinal axis of the tension and/or compression element (12) or a direction substantially in parallel therewith, by means of an elongated standard tool for the purpose of switching the coupling piece between the releasing position and the locking position, **characterised in that** the actuating members are formed by means of slots (19, 20) which are integrally formed on the second part (7") and which are mutually spaced apart in a direction transverse to the longitudinal axis of the inserted tension and/or compression element (12) and are formed by means of shaft-like or tube-like hollow spaces which extend at least approximately in parallel with said longitudinal axis and are arranged for receiving the standard tool.

2. Transfer system for transferring tensile and/or compressive forces between two mutually spaced apart points for use in the vehicle sector between an actuating member and an assembly to be actuated, having a tension and/or compression element (12), whose at least one end comprises a connecting portion (13) intended for releasable connection to a coupling piece, wherein the coupling piece forms the respective attaching link in the region of the actuating member and/or said assembly, wherein the coupling piece consists of a housing (1, 23) and an actuating element (7, 22, 27) which is pivotable thereon about an axis (6) between a releasing position, which permits insertion and removal of the tension and/or compression element (12), and a locking position which fixes the tension and/or compression element (12) in the inserted position, wherein the actuating element (7, 22, 27) consists of a first part (7', 22', 27') and a second part (7", 22", 27") extending at an angle with respect to the first part, one of which parts is operatively connected to a locking element (16) which is slidably received in a guide (14) - extending perpendicularly with respect to the longitudinal axis (15) of the tension and/or compression element (12) - of the housing (1) and, in the locking position, is connected in a form-fitting manner to the connecting portion (13), wherein the locking position of the actuating element (7, 22, 27) is secured by a form-fit of an element pairing consisting of a locking edge (10) and a counter edge (11) which are located at mutually facing regions of the actuating element or of the housing (1, 23), wherein the actuating element (7, 22, 27) is mounted at the free end of one of its two respective first and second parts (7', 7"; 22', 22"; 27', 27") so as to be able to pivot about the axis (6), and wherein the housing (1, 23) and/or the actuating element (7, 22, 27) is/are equipped with actuating members which can be actuated from a direction in parallel with the longitudinal axis of the tension and/or compression element (12) or a direction substantially in parallel therewith, by means of an elongated standard tool for the purpose of switching the coupling piece between the releasing position and the locking position, **characterised in that** the actuating member is formed by means of a slot (20) which is integrally formed on the second part (27") and is formed by means of a shaft-like or tube-like hollow space which extends at least approximately in parallel with the longitudinal axis of the inserted tension and/or compression element (12) and is arranged for receiving the standard tool.

3. Transfer system as claimed in claim 1 or 2, **characterised in that** said element pairing is elastically pretensioned in the locking position of the coupling piece.

4. Transfer system as claimed in claim 2, **characterised in that** the shaft-like or tube-like hollow space which constitutes the slot (20) extends substantially in the plane of the first part (27') of the actuating element (27).

5. Transfer system as claimed in any one of preceding claims 1 to 4, **characterised in that** the hollow spaces which constitute the slots (19, 20) are dimensioned and arranged with the proviso that an elastic deformation - suitable for releasing the engagement of said element pairing - of the respective second part (7", 27") with respect to the respective first part (7', 27') can be produced by means of a screwdriver (21).

6. Transfer system according to claim 1 or 3, **characterised in that** the actuating member is formed by means of a lug (24) which is integrally formed on the housing (23), encloses an aperture (26) and extends through a slot (25) - arranged on the first part (22') remote from the axis (6) - of the actuating element (22) according to its angle of pivot about the axis (6), that the aperture (26) extends at least substantially in a plane transverse to the longitudinal axis of the inserted tension and/or compression element (12) and is intended and arranged to receive the standard tool from a direction at least substantially in parallel with the longitudinal axis of the tension and/or compression element (12) for the purpose of applying a force which pivots the actuating element (22) with respect to the housing (23) about the axis (6).

7. Transfer system as claimed in claim 6, **characterised in that** the plane of the aperture (26) extends approximately in the plane of the second part (22") of the actuating element (22) and that located at the free end of said second part is a web element (26') which extends perpendicularly with respect to the tension and/or compression element (12) and is dimensioned with the proviso that when the coupling piece is in the locking position said web element protrudes laterally from the housing (23) and by means of the standard tool is suitable for exerting a force which is directed perpendicularly thereto and is intended for releasing the engagement of said element pairing.

8. Transfer system as claimed in claim 7, **characterised in that** the element pairing consisting of a latching edge (10) and a counter edge (11) is located in immediate proximity to the web element (26') on the second part (22') and the housing (23).

9. Transfer system as claimed in any one of preceding claims 1 to 8, **characterised in that** in order to mount the actuating element (7, 22, 27) on the housing (1, 23) two bearing cheeks (8) which are mutually spaced apart in the direction of the axis (6) are provided on the housing or the actuating element and are intended and arranged for cooperating with two bearing pins (5) which in each case are integrally formed on a bearing bracket (4) and are located on the actuating element or the housing.

## Revendications

1. Système de transmission pour la transmission de forces de traction et/ou de compression entre deux points espacés l'un de l'autre pour une utilisation dans la zone de véhicule entre un organe d'actionnement et un ensemble à actionner, avec un élément de traction et/ou de compression (12), dont au moins une extrémité présente une section de liaison (13) destinée à la liaison amovible avec une pièce de couplage, la pièce de couplage formant l'organe de liaison respectif dans la zone de l'organe d'actionnement et/ou de l'ensemble cité, la pièce de couplage se composant d'un boîtier (1, 23) et d'un élément d'actionnement (7, 22, 27) pouvant pivoter sur celui-ci autour d'un axe (6) entre une position de libération permettant une insertion ainsi qu'un retrait de l'élément de traction et/ou de compression (12) et une position de verrouillage fixant l'élément de traction et/ou de compression (12) dans la position insérée, l'élément d'actionnement (7, 22, 27) se composant d'une première partie (7', 22', 27') et d'une seconde partie (7", 22", 27") s'étendant de manière angulaire par rapport à la première, dont une partie est en liaison active avec un élément de verrouillage (16) se trouvant dans la position de verrouillage dans une liaison à complémentarité de formes avec la section de liaison (13), reçu de manière à pouvoir glisser dans un guidage (14) du boîtier (1) s'étendant perpendiculairement à l'axe longitudinal (15) de l'élément de traction et/ou de compression (12), la position de verrouillage de l'élément d'actionnement (7, 22, 27) étant bloquée par une liaison à complémentarité de formes d'un appariement d'élément se composant d'une arête de verrouillage (10) et d'une arête antagoniste (11) qui se trouvent sur des zones tournées les unes vers les autres de l'élément d'actionnement ou du boîtier (1, 23), l'élément d'actionnement (7, 22, 27) étant logé de manière pivotante sur l'extrémité libre d'une de ses deux premières et secondes parties respectives (7', 7" ; 22', 22" ; 27', 27") autour de l'axe (6), et le boîtier (1, 23) et/ou l'élément d'actionnement (7, 22, 27) étant équipé(s) d'organes d'actionnement qui sont actionnables depuis une direction parallèle à l'axe longitudinal de l'élément de traction et/ou de compression (12) ou depuis une direction sensiblement parallèle à celui-ci à l'aide d'un outil standard étiré en longueur à des fins de mise en circuit de la pièce de couplage entre la position de libération et la position de verrouillage, **caractérisé en ce que** les organes d'actionnement sont constitués par des fentes (19, 20) formées sur la seconde partie (7") et espacées l'une de l'autre dans une direction transversale à l'axe longitudinal de l'élément de traction et/ou de compression inséré (12) et sont formés par des espaces creux de type puits ou tube, s'étendant au moins approximativement parallèlement à l'axe longitudinal cité, aménagés pour la réception de l'outil standard.

2. Système de transmission pour la transmission de forces de traction et/ou de compression entre deux points espacés l'un de l'autre pour une utilisation dans la zone de véhicule entre un organe d'actionnement et un ensemble à actionner, avec un élément de traction et/ou de compression (12), dont au moins une extrémité présente une section de liaison (13) destinée à la liaison amovible avec une pièce de couplage, la pièce de couplage formant l'organe de liaison respectif dans la zone de l'organe d'actionnement et/ou de l'ensemble cité, la pièce de couplage se composant d'un boîtier (1, 23) et d'un élément d'actionnement (7, 22, 27) pouvant pivoter sur celui-ci autour d'un axe (6) entre une position de libération permettant une insertion ainsi qu'un retrait de l'élément de traction et/ou de compression (12) et une position de verrouillage fixant l'élément de traction et/ou de compression (12) dans la position insérée, l'élément d'actionnement (7, 22, 27) se composant d'une première partie (7', 22', 27') et d'une seconde partie (7", 22", 27") s'étendant de manière angulaire par rapport à la première, dont une partie est en liaison active avec un élément de verrouillage (16) se trouvant dans la position de verrouillage dans une liaison à complémentarité de formes avec la section de liaison (13), reçu de manière à pouvoir coulisser dans un guidage (14) du boîtier (1) s'étendant perpendiculairement à l'axe longitudinal (15) de l'élément de traction et/ou de compression (12), la position de verrouillage de l'élément d'actionnement (7, 22, 27) étant bloquée par une liaison à complémentarité de formes d'un appariement d'élément se composant d'une arête de verrouillage (10) et d'une arête antagoniste (11) qui se trouvent sur des zones tournées les unes vers les autres de l'élément d'actionnement ou du boîtier (1, 23), l'élément d'actionnement (7, 22, 27) étant logé de manière pivotante sur l'extrémité libre d'une de ses deux premières et secondes parties respectives (7', 7" ; 22', 22" ; 27', 27") autour de l'axe (6), et le boîtier (1, 23) et/ou l'élément d'actionnement (7, 22, 27) étant équipé (s) d'organes d'actionnement qui sont actionnables depuis une direction parallèle à l'axe longitudinal de l'élément de traction et/ou de compression (12) ou depuis une direction sensiblement parallèle à celui-ci à l'aide d'un outil standard étiré en longueur à des fins de mise en circuit de la pièce de couplage entre la position de libération et la position de verrouillage, **caractérisé en ce que** l'organe d'actionnement est constitué par une fente (20) formée sur la seconde partie (27") qui est formée par un espace creux de type puits ou tube, s'étendant au moins approximativement parallèlement à l'axe longitudinal de l'élément de traction et/ou de compression (12) inséré, aménagé pour la réception de l'outil standard.

3. Système de transmission selon la revendication 1 ou 2, **caractérisé en ce que** l'appariement d'élément cité est en précontrainte élastique dans la position de verrouillage de la pièce de couplage.

4. Système de transmission selon la revendication 2, **caractérisé en ce que** l'espace creux de type puits ou tube constituant la fente (20) s'étend sensiblement dans le plan de la première partie (27') de l'élément d'actionnement (27).

5. Système de transmission selon l'une quelconque des revendications précédentes 1 à 4, **caractérisé en ce que** les espaces creux constituant les fentes (19, 20) sont dimensionnés et disposés à la condition qu'une déformation élastique appropriée pour desserrer l'engagement de l'appariement d'élément cité de la seconde partie respective (7", 27") puisse être constituée par rapport à la première partie respective (7', 27') à l'aide d'un tournevis (21).

6. Système de transmission selon la revendication 1 ou 3, **caractérisé en ce que** l'organe d'actionnement est formé par un étrier (24) entourant un évidement (26), formé sur le boîtier (23) et s'étendant à travers une fente (25) disposée à distance de l'axe (6) sur la première partie (22') de l'élément d'actionnement (22) selon son angle de pivotement autour de l'axe (6), **en ce que** l'évidement (26) s'étend au moins sensiblement dans un plan transversal à l'axe longitudinal de l'élément de traction et/ou de compression inséré (12) et est destiné et aménagé pour la réception de l'outil standard depuis une direction au moins sensiblement parallèle à l'axe longitudinal de l'élément de traction et/ou de compression (12) en vue de l'application d'une force pivotant l'élément d'actionnement (22) par rapport au boîtier (23) autour de l'axe (6).

7. Système de transmission selon la revendication 6, **caractérisé en ce que** le plan de l'évidement (26) s'étend approximativement dans le plan de la seconde partie (22') de l'élément d'actionnement (22) et un élément de traverse (26') s'étendant perpendiculairement à l'élément de traction et/ou de compression (12) se trouve sur l'extrémité libre de la seconde partie citée, lequel élément de traverse est dimensionné de sorte à dépasser dans la position de verrouillage de la pièce de couplage latéralement hors du boîtier (23) et à convenir à l'aide de l'outil standard pour l'exercice d'une force destinée à desserrer l'engagement de l'appariement d'élément cité, dirigé perpendiculairement à celui-ci.

8. Système de transmission selon la revendication 7, **caractérisé en ce que** l'appariement d'élément se composant d'une arête d'encliquetage (10) et d'une arête antagoniste (11) se trouve à proximité directe de l'élément de nervure (26') sur la seconde partie (22") ainsi que le boîtier (23).

9. Système de transmission selon l'une quelconque des revendications précédentes 1 à 8, **caractérisé en ce que**, pour le logement de l'élément d'actionnement (7, 22, 27) sur le boîtier (1, 23), deux joues supports (8) espacées l'une de l'autre en direction de l'axe (6) sont prévues sur le boîtier ou l'élément d'actionnement, lesquelles sont destinées et disposées pour coagir avec deux tourillons (5) se trouvant sur l'élément d'actionnement ou le boîtier, formés respectivement sur une console de palier (4).
